# EUROPÄISCHE PATENTSCHRIFT

(11) **EP 1 946 038 B1**
(45) Veröffentlichungstag und Bekanntmachung des Hinweises auf die Patenterteilung: **23.09.2009**
(21) Anmeldenummer: 06807745.2
(22) Anmeldetag: 06.11.2006
(51) Int. Cl.: G01B 7/06, G01L 5/04, D21F 7/06

(54) **VORRICHTUNG ZUM INSPIZIEREN EINES FLÄCHENGEBILDES**
APPARATUS FOR INSPECTION OF A FLAT STRUCTURE
DISPOSITIF D'INSPECTION D'UN PRODUIT PLAN

(30) Priorität: 07.11.2005 DE 202005017506 U
(43) Veröffentlichungstag der Anmeldung: 23.07.2008
(73) Patentinhaber: Huyck.Wangner Germany GmbH, 72760 Reutlingen (DE)
(72) Erfinder: KRONES, Bernd, 72793 Pfullingen (DE); LÖSCHER, René, 72768 Reutlingen (DE); RIST, Mathias, 72768 Reutlingen (DE)
(74) Vertreter: Gritschneder, Martin
(86) Internationale Anmeldenummer: PCT/EP2006/068108
(87) Internationale Veröffentlichungsnummer: WO 2007/051850

(56) Entgegenhaltungen:
- WO-A-96/07871
- WO-A2-03/031904
- US-A- 5 132 619

## Beschreibung

### Technisches Gebiet

Die Erfindung betrifft eine Vorrichtung zum Inspizieren eines Flächengebildes, z. B. einer Papiermaschinenbespannung. Die Inspektion kann darin bestehen, dass bestimmte Eigenschaften des Flächengebildes, z. B. die Dicke, die Längsspannung oder die Luftdurchlässigkeit, gemessen wird. Die Inspektion kann auch optischer Natur sein, indem z. B. ein optisches Abbild eines ausgewählten Abschnittes erstellt wird. Die Vorrichtung weist einen oberen und einen unteren Schlitten auf, die für die Anordnung auf der Oberseite bzw. der Unterseite des Flächengebildes vorgesehen sind. Die beiden Schlitten werden durch Magnete aneinander gehalten, wobei sich zwischen ihnen das Flächengebilde befindet. Mittels einer Antriebseinrichtung kann die Vorrichtung über das Flächengebilde bewegt werden. Die Antriebseinrichtung weist einen Raupenantrieb mit zwei seitlich beabstandeten Antriebsriemen auf.

### Stand der Technik

Aus WO 96/07871 ist eine derartige Vorrichtung bekannt. Die Kraftmessdose, mittels der das Spannungsprofil aufgenommen wird, ist fest im oberen Schlitten eingebaut. Ebenso sind die induktiven Wandler, mittels derer das Dickenprofil aufgenommen wird, fest im oberen Schlitten eingebaut. Da die Vorrichtung geradlinig über die Papiermaschinenbespannung fährt, ist der Weg, längs dem das Spannungsprofil oder das Dickenprofil aufgenommen wird, durch die Ausrichtung festgelegt, in der die Vorrichtung zu Beginn der Messung am Rand der Papiermaschinenbespannung aufgesetzt wird.

Aus US 5 132 619 ist eine Vorrichtung zum Inspizieren eines Flächengebildes mit einem oberen und einem unteren Schlitten bekannt. Die beiden Schlitten tragen ein Gerät zum Messen der Dicke des Flächengebildes. Das Messmodul ist auf dem einen Schlitten über Gummiringe schwimmend gelagert, und ebenso die Gegenplatte auf dem anderen Schlitten.

Aus EP 1 273 879 ist eine Vorrichtung zum Messen der Dicke einer Papierbahn bekannt, wobei die Papierbahn zwischen zwei stationären Messköpfen hindurchgeführt wird, mittels Unterdruck an einen Messkopf angelegt wird und mittels Laserstrahl der Abstand von dem anderen Messkopf gemessen wird.

Aus EP 1 249 682 ist eine Anordnung zum Sauberhalten einer solchen Messvorrichtung bekannt, wobei vor den Messköpfen eine Sprüheinrichtung angeordnet ist, die ein Reinigungsmittel auf die Papierbahn sprüht.

Aus DE 102 55 873 ist eine Vorrichtung zum Überwachen des Randes einer Bahn bekannt, bei dem auf der Oberfläche der die Bahn lenkenden Walze ein druckempfindliches Sensorelement angeordnet ist, das auf den von der bewegten Bahn auf das Sensorelement ausgeübten Druck durch Erzeugen eines elektrischen Signals reagiert, aufgrund dessen die genaue Position des Randes der Bahn auf der Walze bestimmt werden kann. Bei der Bahn kann es sich um eine Papiermaschinenspannung oder eine Papierbahn handeln.

Aus DE 102 05 001 ist ein handgeführtes Ortungsgerät bekannt, bei dem eine erste Bewegungskenngröße über Wälzkörper des Fahrwerks und eine zweite Bewegungskenngröße über einen elektrooptischen Sensor erfasst werden. Durch einen Vergleich der beiden Bewegungskenngrößen können Messfehler korrigiert werden oder können unerwünschte Bewegungen des Ortungsgerätes erkannt werden. Gemäß DE 102 05 000 verläuft bei einem solchen Ortungsgerät wenigstens eine Bewegungsmessrichtung quer zur Längserstreckung des Gehäuses des Ortungsgerätes.

Aus DE 203 14 026 U ist eine Vorrichtung zum berührungslosen Vermessen einer Oberfläche bekannt, bei der ein Verfahrtisch, der von der Lichtquelle räumlich getrennt ist, auf der zu vermessenden Oberfläche aufstellbar ist und einen Messkopfhalter aufweist, der gegenüber der zu vermessenden Oberfläche verfahrbar ist.

Aus EP 0 358 311 ist eine Vorrichtung zur Messung der Geschwindigkeit und Länge einer Bahn bekannt, wobei die Stromaufnahme der Transporteinrichtung gemessen wird.

Aus US-A-2002/0178602 ist eine Vorrichtung zum Messen der Dicke einer Kohlenstoffschicht, die auf eine Kathodenstrahlröhre aufgebracht wird, oder einer anderen Materialschicht bekannt. Dazu wird eine Klinge oder Spitze in die Materialbahn gedrückt und die Eindringtiefe gemessen.

Aus US-A-5 619 423 ist es bekannt, die Qualität des Wandmaterials von Rohren oder Tanks mittels eines elektromagnetischen akustischen Wandlers, der auf der Oberfläche bewegt wird, zu prüfen.

Aus DE-C-197 04 080 ist ein geländegängiges Miniaturfahrzeug mit Raupenantrieb bekannt, das Druckmesssensoren aufweist und Teil eines Minensuchgerätes ist.

### Darstellung der Erfindung

### Technische Aufgabe

Der Erfindung liegt die Aufgabe zugrunde, eine Vorrichtung zum Inspizieren eines Flächengebildes, wie einer Papiermaschinenbespannung, zu schaffen, mittels der der Inspektionsweg über die Breite des Flächengebildes auch während der Messung geändert oder korrigiert werden kann.

### Technische Lösung

Erfindungsgemäß wird diese Aufgabe bei einer Vorrichtung der eingangs genannten Art dadurch gelöst, dass jeder Antriebsriemen einen eigenen Antrieb hat und die Antriebsriemen mit unterschiedlichen Geschwindigkeiten antreibbar sind.

### Vorteilhafte Wirkungen

Durch diese Ausbildung kann die Fahrrichtung der Inspektionsvorrichtung während der Fahrt geändert werden, so dass der Fahrweg beliebig gewählt werden kann und auch nachträglich korrigiert werden kann.

Dadurch, dass die Antriebsriemen mit unterschiedlichen Geschwindigkeiten antreibbar sind, kann eine Richtungsänderung vorgenommen werden. Hierzu ist jeder Antriebsriemen mit einem eigenen Antrieb ausgestattet. Bei diesem Antrieb handelt es sich vorzugsweise um einen Schrittmotor.

Die Antriebsriemen laufen um zwei Riemenscheiben, von denen mindestens eine angetrieben ist. Vorzugsweise sind die Antriebsriemen Zahnriemen und ist zumindest die angetriebene Riemenscheibe eine Zahnriemenscheibe. Das dem Flächengebilde nahe Trumm des Antriebsriemens läuft unter einer Gleitschiene hindurch. Es können statt dessen oder zusätzlich auch weitere Riemenscheiben vorgesehen sein.

Die Antriebsriemen sind zweckmäßig PU-Riemen, wobei zur Vermeidung einer wesentlichen Dehnung feine, in Längsrichtung verlaufende Stahldrähte in die Antriebsriemen eingebettet sind. Die Außenseite der Antriebsriemen ist zweckmäßig mit einer rauen Oberfläche oder einer Reiboberfläche aus Gummi beschichtet. Geeignete Antriebsriemen sind unter den Bezeichnungen Minigrip, Linatex, Linatrile und PVC blau von NK Kunststofftechnik GmbH, 69514 Laudenbach, Deutschland, erhältlich. Besonders geeignet ist der Typ Minigrip 16T5/625.

Durch die Magnete wird der untere Schlitten von unten gegen das Flächengebilde gehalten und der obere Schlitten zusätzlich zu seinem Gewicht auch durch die Magnetkraft auf das Flächengebilde gedrückt, wodurch die Traktion des Raupenantriebs verbessert wird.

Der obere und der untere Schlitten haben jeweils etwa gleich große rechteckförmige Rahmen mit einer Anzahl, zweckmäßig mindestens vier, Magnete, vorzugsweise Permanentmagnete. Jeweils ein Magnet des oberen Schlittens ist dabei einem fluchtend angeordneten Magnet des unteren Schlittens zugeordnet, d.h. die Magnete sind paarweise angeordnet, wobei der eine Magnet im oberen Schlitten und der andere im unteren Schlitten angeordnet ist und sich die beiden Magnete eines Paares bezüglich dem Flächengebilde gegenüber liegen. Jeweils ungleichnamige Pole sind einander zugewandt. Durch die Anziehungskraft der Magnete folgt der untere Schlitten auf der Unterseite des Flächengebildes dem auf der Oberseite des Flächengebildes fahrenden oberen Schlitten.

Mittels der Inspektionsvorrichtung können Messeinrichtungen oder eine Kamera über das Flächengebilde hinweg bewegt werden, so dass das Profil der gemessenen Werte längs des Fahrweges aufgezeichnet werden kann oder mittels einer Kamera eine beliebige Stelle des Flächengebildes optisch inspiziert werden kann. Die Messdaten oder das aufgenommene Bild der inspizierten Stelle werden dann über eine Funkverbindung an eine Basisstation übertragen, die außerhalb des Flächengebildes installiert ist. Die Datenübertragung erfolgt zweckmäßig drahtlos, z. B. über ein WLAN-System.

Der untere Schlitten läuft auf Rollen oder gleitet auf Gleitkufen an der Unterseite des Flächengebildes. Er trägt bestimmte Komponenten der einzelnen Messgeräte. Um dem unteren Schlitten möglichst wenig Gewicht zu geben, sind der Antrieb, die Messgeräte, die Kamera und die Sende-Empfangseinrichtung auf dem oberen Schlitten montiert. Grundsätzlich können jedoch einzelne dieser Komponenten auch auf dem unteren Schlitten montiert sein.

Die Inspektionsvorrichtung ist vorzugsweise modular aufgebaut, wobei die Antriebseinrichtungen und die Sende-Empfangseinrichtung auf dem Rahmen des oberen Schlittens fest installiert sind. Auf dem Rahmen wird ein Messmodul festgeklemmt oder mit wenigen Schrauben befestigt. Das Messmodul kann verschiedene Messgeräte enthalten. Der Rahmen hat eine oder mehrere Öffnungen und das Messmodul wird von unten in den Rahmen eingesetzt, wobei die auf dem Messmodul installierten Messgeräte in diesen Öffnungen aufgenommen werden.

Vorzugsweise ist das Messmodul schwimmend in dem oberen Rahmen des oberen Schlittens gelagert. Die schwimmende Lagerung kann durch Arretierbolzen erfolgen, die am Rahmen des oberen Schlittens angeordnet sind und sich mit Spiel seitlich in Aufnahmen erstrecken, die am Messmodul vorgesehen sind, oder durch eine andere elastische oder Spiel aufweisende Halterung. Der obere Rahmen des oberen Schlittens und der untere Schlitten werden von den paarweise gegenüberliegenden Magneten auf gegenüberliegenden Seiten des Flächengebildes gehalten. Diese Magnete bilden hier eine erste Gruppe. Das schwimmend gelagerte Messmodul und der untere Schlitten werden durch eine zweite Gruppe ähnlicher Magnete zusammengehalten, im Allgemeinen ebenfalls vier Stück. Die Antriebseinrichtung mit dem Raupenantrieb ist an dem oberen Rahmen montiert.

Der untere Schlitten ist vorzugsweise in einen unteren Rahmen und eine Messgegenplatte unterteilt, wobei die Messgegenplatte schwimmend oder mit Spiel an dem unteren Rahmen gelagert ist. An der Messgegenplatte sind dabei Teile der Messeinrichtung montiert, die mit anderen Teilen der Messeinrichtungen, die in dem Messmodul montiert sind, zusammenarbeiten. Die Magnete der ersten Gruppe sind am oberen Rahmen des oberen Schlittens und am unteren Rahmen des unteren Schlittens angeordnet, während die Magnete der zweiten Gruppe an dem Messmodul und der Messgegenplatte angeordnet sind.

Der Vorteil dieser Ausführungsform besteht darin, dass sich eventuelle Ungleichförmigkeiten der Dicke der Antriebsriemen und kleinere auf dem Flächengebilde liegende oder an ihm haftende Fremdkörper nicht auf die Messungen der Dicke des Flächengebildes oder der Spannung des Flächengebildes auswirken. Die schwimmende Lagerung ist dabei insbesondere so ausgebildet, dass in vertikaler Richtung eine Verlagerung des Messmoduls und gegebenenfalls der Messgegenplatte von einigen Millimetern gegenüber dem oberen Rahmen des oberen Schlittens und gegebenenfalls dem unteren Rahmen des unteren Schlittens möglich ist. Es genügt dazu, ein entsprechendes Spiel in der Lagerung des Messmoduls und gegebenenfalls der Messgegenplatte vorzusehen.

Zur Inspektion einer Papiermaschinenbespannung kann das Messmodul z. B. Messgeräte für die Dicke und für die Längsspannung sowie eine Einrichtung zur Messung der zurückgelegten Wegstrecke aufweisen. Durch Zuordnung dieser Messdaten kann dann das Dickenprofil und das Spannungsprofil über die zurückgelegte Wegstrecke ermittelt werden. Alternativ oder zusätzlich kann das Messmodul eine Kamera zur optischen Inspektion des Flächengebildes tragen. Zur Untersuchung der Luftdurchlässigkeit einer Papiermaschinenbespannung kann ein Messmodul verwendet werden, das ein Gebläse mit einem Drucksensor zur Messung des Staudrucks aufweist.

Die Bestimmung der Längsspannung des Flächengebildes erfolgt z. B. mittels einer Druckmessdose, die die Kraft aufnimmt, die von einer auf dem Flächengebilde gleitenden Keramikkugel oder einem konvexen Tastkopf ausgeübt wird. In einem geringen seitlichen Abstand von der Stelle, an der die Keramikkugel oder der Tastkopf das Flächengebilde berührt, können dabei im oberen Schlitten bzw. im Messmodul Führungskufen vorgesehen sein. Entsprechende gegenüberliegende Führungskufen sind auch auf dem unteren Schlitten bzw. der Messgegenplatte vorgesehen, so dass das Flächengebilde zwischen diesen Führungskufen in einer definierten Ebene gehalten wird. Die Keramikkugel oder der Tastkopf sind so angeordnet, dass sie ein vorgegebenes Ausmaß, z. B. 2 mm in diese Ebene vorsteht. Die Kraft, die auf die Keramikkugel oder den Tastkopf bei dieser Auslenkung des Flächengebildes ausgeübt wird, dient als Maß für die Längsspannung. Die Führungskufen des unteren Schlittens sind gegenüber denen des oberen Schlittens etwas nach innen oder außen versetzt, damit das Gewebe oder sonstige Flächengebilde nicht zu stark an den Führungskufen reibt.

Insbesondere bei der vorausgehen erwähnten Ausführungsform der Erfindung sind die Führungskufen am Messmodul im Allgemeinen nicht erforderlich.

Das Messgerät zur Ermittlung der Dicke des Flächengebildes besteht zweckmäßig aus einem Wirbelstrom-Wegaufnehmer, der am oberen Schlitten oder am Messmodul montiert ist, und einem gegenüberliegenden Referenzelement am unteren Schlitten oder an der Messgegenplatte. Der Wirbelstrom-Wegaufnehmer ist am oberen Schlitten oder am Messmodul senkrecht zum Flächengebilde linear verschiebbar gelagert und wird mittels eines Tastkopfes in einem geringen Abstand von weniger als 0,5 mm von der Oberfläche des Flächengebildes gehalten, damit der Wegaufnehmer nicht auf dem Gewebe aufsitzt und er sich nicht abnutzt.

### Kurze Beschreibung der Zeichnungen

Zwei Ausführungsbeispiele der Erfindung werden nachfolgend anhand der Zeichnung näher erläutert. Es zeigen:
Fig. 1 die Inspektionsvorrichtung nach dem ersten Ausführungsbeispiel in einer räumlichen Darstellung von schräg oben hinten, wobei das Flächengebilde nicht eingezeichnet ist;
Fig. 2 den oberen Schlitten der Inspektionsvorrichtung von Fig. 1 in einer räumlichen Darstellung von schräg unten hinten;
Fig. 3 den untern Schlitten der Inspektionsvorrichtung von Fig. 1 in einer räumlichen Darstellung von schräg oben;
Fig. 4 die Komponenten der Inspektionsvorrichtung von Fig. 1 in einer auseinander gezogenen Darstellung von der Seite;
Fig. 5 den oberen Schlitten der Inspektionsvorrichtung von Fig. 1 von unten;
Fig. 6 den oberen Schlitten der Inspektionsvorrichtung von Fig. 1 in einer räumlichen Explosionsdarstellung von schräg unten hinten;
Fig. 7 das Messmodul der Inspektionsvorrichtung von Fig. 1 von schräg oben;
Fig. 8 die Inspektionsvorrichtung von Fig. 1 im Schnitt quer zur Fahrrichtung;
Fig. 9 die Inspektionsvorrichtung von Fig. 1 mit einer Kamera in einer räumlichen Darstellung von schräg oben hinten;
Fig. 10 die Teile der Kamera;
Fig. 11 die Inspektionsvorrichtung nach dem zweiten Ausführungsbeispiel in einer räumlichen Explosionsdarstellung von schräg oben vorne;
Fig. 12 den oberen Schlitten der Inspektionsvorrichtung von Fig. 11 von unten; und
Fig. 13 im Schnitt die Inspektionsvorrichtung von Fig. 11, wobei insbesondere die schwimmende Lagerung des unteren Schlittens an dem oberen Schlitten erkennbar ist.

### Weg(e) zur Ausführung der Erfindung

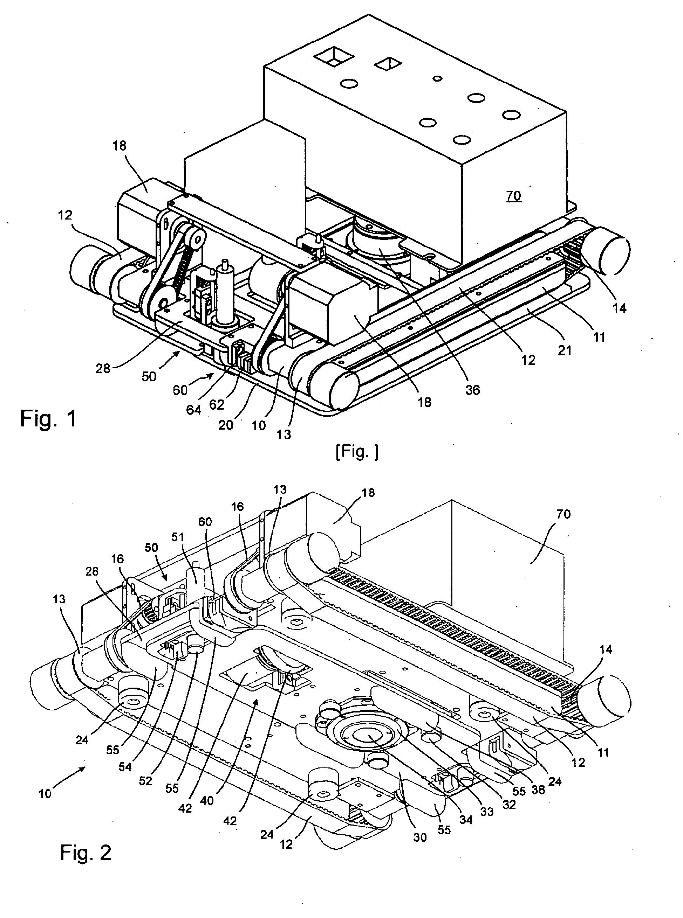

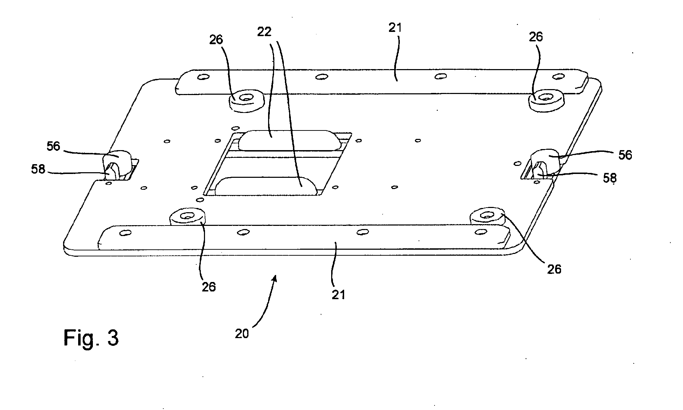

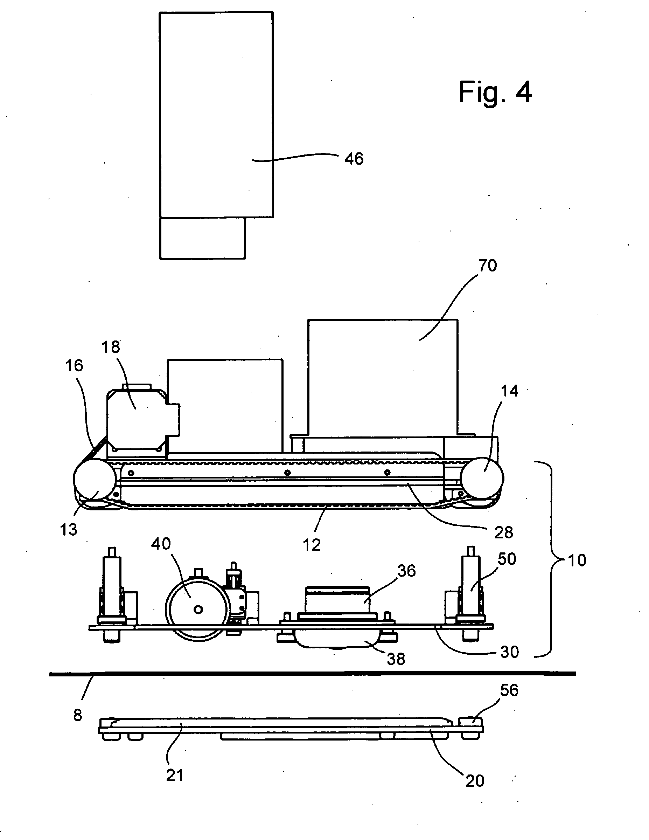

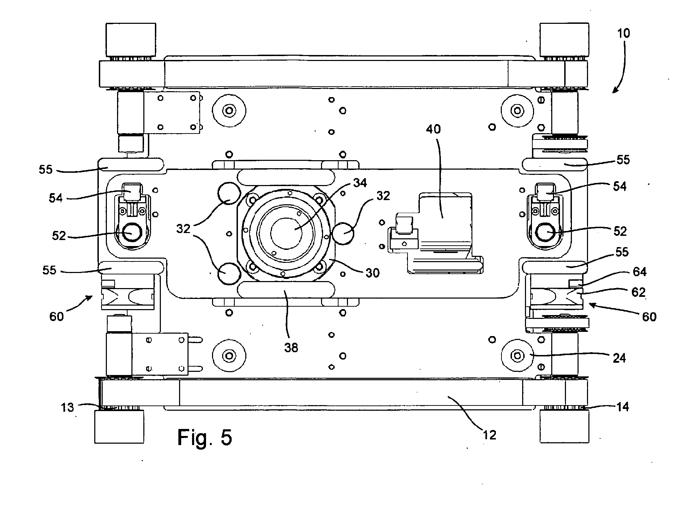

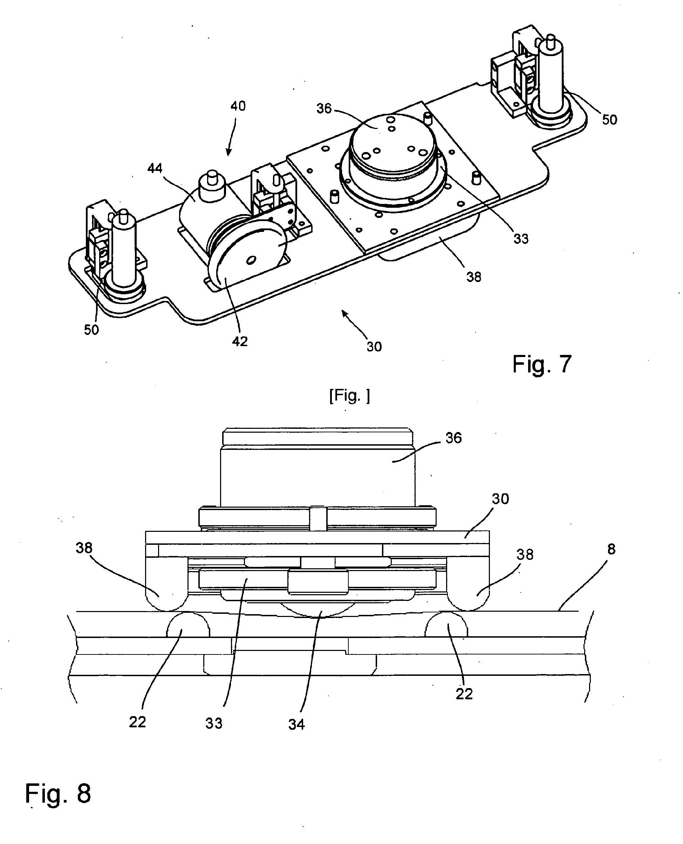

Bei dem in den Figuren 1 bis 10 dargestellten ersten Ausführungsbeispiel weist die Inspektionsvorrichtung einen oberen Schlitten 10 und einen unteren Schlitten 20 auf (Fig. 1 und 4). Der obere Schlitten 10 weist auf der Unterseite vier Permanentmagnete 24 auf, und der untere Schlitten 20 weist auf der Oberseite entsprechende Magnete 26 auf (Fig. 2 und 3). Der obere Schlitten 10 ist auf eine Papiermaschinenbespannung 8 aufgesetzt, die im Ausführungsbeispiel das zu inspizierende Flächengebilde ist (Figuren 4 und 8). Der untere Schlitten 20 ist auf der Unterseite der Papiermaschinenbespannung 8 angeordnet und wird dort mittels der Magnete 24, 26 gehalten, wozu die Magnete 24 des oberen Schlittens 10 und die Magnete 26 des unteren Schlittens 20 einander gegenüberliegend und fluchtend angeordnet sind. Zur Vermeidung von Reibung halten die Magnete 24, 26 einen geringen Abstand von der Oberfläche der Papiermaschinenbespannung 8.

Als Antriebseinrichtung ist in dem oberen Schlitten 10 ein Raupenantrieb mit zwei seitlichen angeordneten, endlosen, umlaufenden Antriebsriemen 12 vorgesehen. Die Antriebsriemen 12 sind Zahnriemen und sie werden am vorderen und hinteren Ende des Schlittens mittels Zahnriemenscheiben 14, 13 umgelenkt. Das untere gerade Riementrumm läuft unter einer Führungsschiene 11.

Die hinteren Zahnriemenscheiben 13 werden über Transmissionsriemen 16, die ebenfalls Zahnriemen sind, von zweiphasigen Schrittmotoren 18 angetrieben. Dadurch, dass jeder Antriebsriemen 12 über einen eigenen Schrittmotor 18 angetrieben wird, kann der obere Schlitten 10 wie ein Raupenfahrzeug vorwärts bewegt werden und durch Antrieb der Antriebsriemen 12 mit unterschiedlicher Geschwindigkeit auch Kurven fahren.

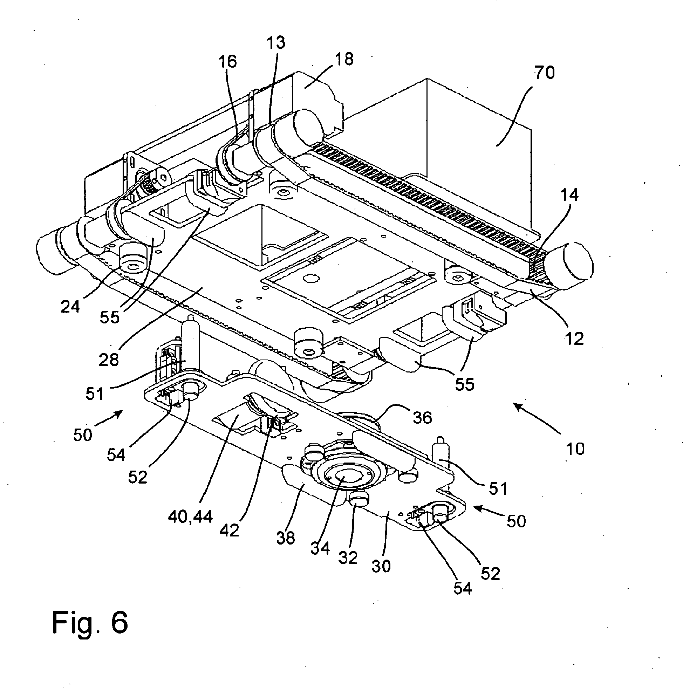

Der obere Schlitten 10 ist modular mit einem oberen Rahmen 28, in den ein Messmodul 30 eingesetzt wird, aufgebaut (Fig. 6). Das Messmodul 30 wird von unten mittels drei Rändelschrauben 32 an dem Rahmen 28 des oberen Schlittens 10 befestigt. Das Messmodul 30 ist eine insgesamt rechteckförmige, längliche Platine, die etwa in der Mitte eine Fassung 33 für eine Keramikkugel 34 aufweist, die auf der Unterseite frei liegt und mit ihrer Oberseite gegen eine Druckmessdose 36 anliegt. Seitlich neben der Fassung 33 der Keramikkugel 34 sind Führungskufen 38 angeordnet. Die Keramikkugel 34 steht nach unten 2 mm über die Führungskufen 38 vor. Dieser Abstand bestimmt die Auslenkung des Flächengebildes und mittels der Druckmessdose 36 wird die Rückstellkraft des Flächengebildes bei dieser Auslenkung gemessen. Sie dient als Maß für die Längsspannung des Flächengebildes. Der Kraftaufnehmer der Druckmessdose ist der Typ 1-C9B/50N der Firma Hottinger Baldwin GmbH, Stuttgart, Deutschland.

Der untere Schlitten 20 gleitet auf Gleitkufen 21 auf der Unterseite der Papiermaschinenbespannung 8. Auf dem unteren Schlitten 20 sind ferner Führungskufen 22 vorgesehen, die ähnlich den Führungskufen 38 des oberen Schlittens 10 sind, parallel zu diesen ausgerichtet sind und diesen gegenüberliegen, so dass die Papiermaschinenbespannung auch nach unten nicht ausweichen kann. Der seitliche Abstand zwischen den Führungskufen 22 des unteren Schlittens 20, der etwas kleiner ist als der zwischen den Führungskufen 38 des oberen Schlittens 10 (Fig. 8), definiert somit die Länge innerhalb der die durch den Vorstand der Kugel definierte Auslenkung erfolgt. Die Messung der Längsspannung erfolgt damit in der Weise, dass die Richtung der Längsspannung quer zur Richtung der Führungskufen 22, 38 und damit auch quer zur Fahrtrichtung zeigt.

Am vorderen und hinteren Ende des Messmoduls 30 sind in Aussparungen der Platine Dicken-Messeinrichtungen 50 für die Dicke des Flächengebildes 8 oder der Papiermaschinenbespannung vorgesehen. Dazu sind in vertikalen Linearführungen 51 Wirbelstrom-Wegaufnehmer 52 geführt. Fest verbunden mit jedem Wegaufnehmer 52 ist ein Tastkopf 54, der unmittelbar neben dem Wegaufnehmer angeordnet ist und geringfügig, z. B. 0,5 mm nach unten über den Wegaufnehmer 52 vorsteht, so dass der Wegaufnehmer 52 einen genau definierten Abstand von der Oberseite des Flächengebildes einhält. Seitlich neben dem Wegaufnehmer 52 und dem Tastkopf 54 des Messmoduls 30 sind kurze Distanzkufen 55 angeordnet, die das Flächengebilde 8 in einer definierten Ebene halten. Der Wegaufnehmer 52 arbeitet mit einem gegenüberliegenden Referenzelement 56 zusammen, das auf dem unteren Schlitten 20 angeordnet ist und über einen daneben angeordneten weiteren Tastkopf 58 ebenfalls auf einem definierten Abstand von der Unterseite der Papiermaschinenbespannung 8 gehalten wird. Mittels des Wirbelstrom-Wegaufnehmers 52 wird der Abstand von dem Referenzelement 56 gemessen, woraus dann die Dicke der Papiermaschinenbespannung 8 ermittelt werden kann. Das Referenzelement 58 ist aus Stahl und der Wirbelstrom-Wegaufnehmer 52 kann der Typ WW 109 der Firma Sens-Tec, 46047 Oberhausen, Deutschland, sein.

Ferner ist in der Platine des Messmoduls 30 noch eine Fahrweg-Messeinrichtung 40 vorgesehen, die ein Rad 42 aufweist, das auf dem Flächengebilde abrollt und auf der Welle eines Inkremental-Wellen-Drehgebers 44 sitzt, aus dessen Signalen der zurückgelegte Fahrweg bestimmt wird. Die Fahrweg-Messeinrichtung 40 ist in einer ähnlichen Vertikalführung wie die Wirbelstrom-Wegaufnehmer 52 geführt, so dass das Rad 42 mit gleichförmiger Kraft auf die Papiermaschinenbespannung 8 gedrückt wird.

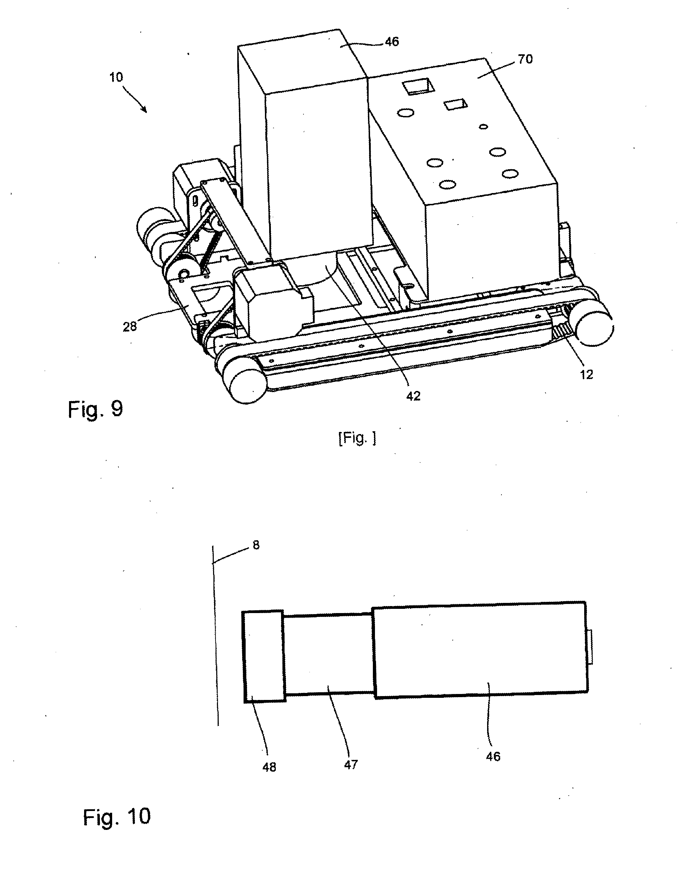

Das in Fig. 6 und 7 gezeigte Messmodul 30 kann mit wenigen Handgriffen durch Lösen der Rändelschrauben 32 ausgebaut werden und kann z. B. durch ein anderes Messmodul ersetzt werden, auf dem eine Netzwerk-Kamera 46 montiert ist (Fig. 9). Da hier eine extreme Nahaufnahme gemacht wird, ist der Netzwerk-Kamera 46 ein Objektiv 47, z. B. Pentax 1,4/50 mm in Retro-Stellung vorgeschaltet. Das Objektiv ist mit einem Beleuchtungsring 48 aus weißen LEDs umgeben (Fig. 10). Damit können Aufnahmen der Oberfläche der Papiermaschinenbespannung 8 im Abstand von wenigen Zentimetern gemacht werden.

Am vorderen und hinteren Ende des Rahmes des oberen Schlittens 10 sind noch Endschalter 60 vorgesehen (Fig. 1, 3 und 5). Die Endschalter 60 weisen einen an einem Ende angelenkten Metallhebel 62 auf, der im normalen Betrieb auf dem Flächengebilde aufliegt und sich dadurch etwa in einer waagrechten Stellung befindet. Das freie Ende des Hebels 62 wird dabei von einem induktiven Sensor 64 erfasst. Alternativ kann auch ein kapazitiver oder optischer Sensor vorgesehen sein. Wenn das vordere oder hintere Ende der Inspektionsvorrichtung den Rand des Flächengebildes erreicht, so fällt der Hebel 62 nach unten und gibt den Sensor 64 frei, wodurch ein Stopp-Signal ausgelöst wird, das den Antrieb der Inspektionsvorrichtung still setzt.

Der obere Schlitten 10 weist ferner eine Elektronikeinheit 70 auf, in der die Steuerung der Schrittmotore 18 enthalten ist. Der Elektronikeinheit 70 werden daher auch die Signale der Sensoren 64 der Endschalter 60 zugeführt. Die Kabelverbindungen haben Spritzwasser-geschützte Stecker (Schutzklasse IP67). Außerdem setzt die Elektronikeinheit 70 die analogen Signale der Druckmessdose 36 und der Wegaufnehmer 52 in digitale Signale um. Ebenso ist der Drehgeber 44 mit ihr verbunden. Die Messwerte werden in der Elektronikeinheit 70 zwischengespeichert. In die Elektronik 70 ist ein Webserver integriert, der über WLAN und eine Ethernet-Schnittstelle mit einem entsprechend ausgerüsteten PC in Verbindung steht und über diesen gesteuert wird. Über diese Verbindung werden sowohl die Fahrfunktionen der Inspektionsvorrichtung gesteuert als auch die aufgenommenen Daten und gegebenenfalls das Signal der Web-Kamera auf den PC übertragen.

Sowohl der Rahmen des oberen Schlittens 10 als auch die Platine des Messmoduls 30 und der untere Schlitten 20 sind aus besonders starrem Werkstoff hergestellt, um Verformungen dieser Komponenten zu vermeiden, die sich auf die Signale der verschiedenen Sensoren auswirken könnten. Ein geeigneter Werkstoff ist Carbonfaserverstärkter Kunststoff.

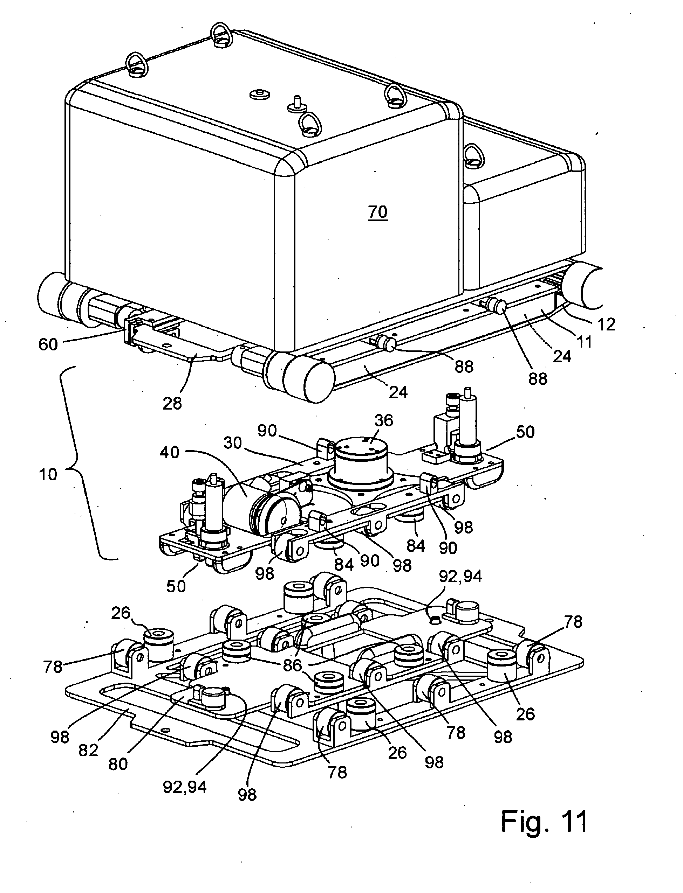

Die Figuren 11 bis 13 zeigen das zweite Ausführungsbeispiel der Erfindung. Abgesehen von den nachfolgend angegebenen Unterschieden stimmt dieses Ausführungsbeispiel mit dem ersten Ausführungsbeispiel überein.

Der wesentliche Unterschied besteht darin, dass das Messmodul nicht starr in dem oberen Rahmen 28 des oberen Schlittens 10 montiert ist, sondern schwimmend in dem Rahmen 28 gelagert ist und dass in ähnlicher Weise in dem unteren Schlitten 20 eine Messgegenplatte 80 in einem unteren Rahmen 82 schwimmend gelagert ist. Auf der Messgegenplatte 80 sind diejenigen Teile der Messeinrichtungen angeordnet, die mit den im Messmodul 30 angeordneten Teilen zusammenwirken, dies sind insbesondere die Führungskufen 22, das Referenzelement 56 und der Tastkopf 58. Die Permanentmagnete 24 des oberen Schlittens 10 und die Permanentmagnete 26 des unteren Schlittens 20 bilden eine erste Gruppe von Permanentmagneten, die an dem oberen Rahmen 28 des oberen Schlittens 10 und an dem unteren Rahmen 82 des unteren Schlittens 20 angeordnet sind und diese beiden Rahmen 28, 82 zusammenhalten. Die Permanentmagnete 24 des oberen Schlittens 10 sind bei diesem Ausführungsbeispiel in die Führungsschienen 11 eingelassen und daher in den Figuren 11 bis 13 nicht sichtbar. Eine zweite Gruppe von Permanentmagneten 84, 86 sind an einander entsprechenden Stellen der Messgegenplatte 80 und des Messmoduls 30 angeordnet und halten diese zusammen, wobei wiederum vier Permanentmagnete 84 auf der Oberseite der Messgegenplatte 80 und vier Permanentmagnete 86 auf der Unterseite des Messmoduls 30 an einander entsprechenden Stellen vorgesehen sind.

Die schwimmende Lagerung des Messmoduls 30 am oberen Rahmen 28 und der Messgegenplatte 80 am unteren Rahmen 82 ist so ausgebildet, dass insbesondere in vertikaler Richtung, also senkrecht zur Oberfläche des Flächengebildes 8 eine Beweglichkeit von etwa 2 mm besteht. In der horizontalen Ebene, das heißt in der Ebene des Flächengebildes 8 braucht dagegen keine Beweglichkeit zu bestehen. Als Folge der Beweglichkeit in der vertikalen Richtung ergibt sich im Allgemeinen auch in der Horizontalen ein Spiel von wenigen Zehntel Millimetern.

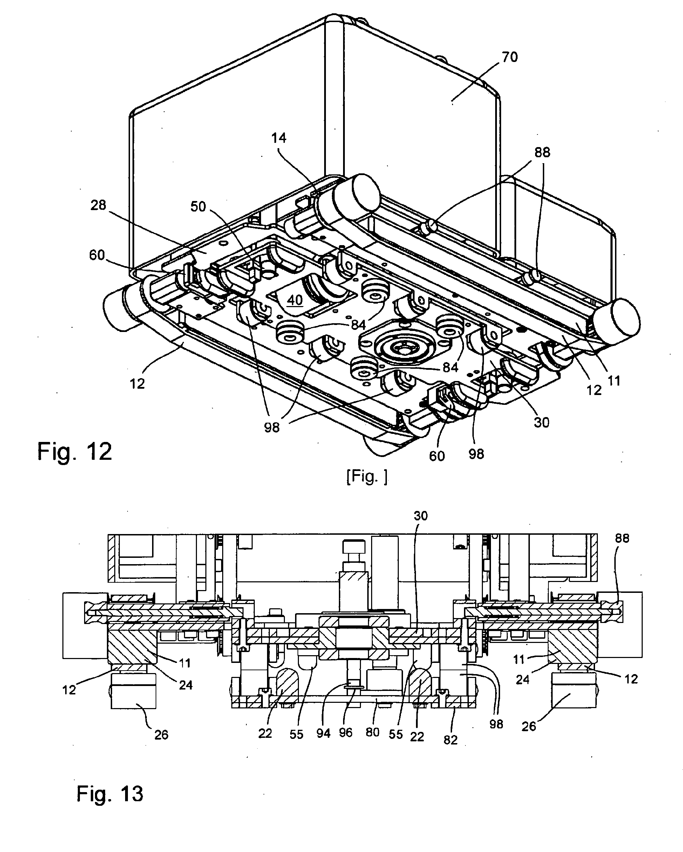

Wie in Fig. 13 erkennbar, sind im oberen Rahmen 28 federbelastete Arretierbolzen 88, die horizontal und quer zur Fahrrichtung zur Inspektionsvorrichtung zeigen. Es sind vier Arretierbolzen 88 vorgesehen. Die Spitzen der Arretierbolzen 88 erstrecken sich in Aufnahmen 90 am Rand des Messmoduls 30. Die Aufnahmen 90 haben in vertikaler Richtung eine Weite, die etwa 2 mm größer ist als der Durchmesser der Spitzen der Arretierbolzen 88, so dass das Messmodul 30 in vertikaler Richtung einen Bewegungsspielraum von 2 mm gegenüber dem oberen Rahmen 28 des oberen Schlittens 10 hat. Die Arretierbolzen 88 sind so ausgebildet, dass sie durch Herausziehen und Verdrehen in der herausgezogenen Stellung gehalten werden. Das Messmodul 30 kann dann nach unten aus dem oberen Rahmen 28 herausgenommen werden, so dass es gegen ein anderes Messmodul ausgetauscht werden kann, das eine andere Eigenschaft des Flächengebildes oder der Papiermaschinenbespannung misst. Die Messgegenplatte 80 sitzt mit Bohrungen 92 mit Spiel auf Bolzen 94, die von dem unteren Rahmen 82 nach oben abstehen. Durch Sicherungsscheiben 96 ist die Beweglichkeit der Messplatte 80 gegenüber dem unteren Rahmen 82 ebenfalls auf etwa 2 mm begrenzt.

Das Messmodul 30 ist damit in seiner vertikalen Position, das heißt, in seinem Abstand von dem Flächengebilde 8 unabhängig von dem oberen Rahmen 28. Die Einheit, die aus dem oberen Rahmen 28 und dem unteren Rahmen 82 gebildet wird, hat damit im Wesentlichen nur eine Transportfunktion für das Messmodul 30. Auf dem oberen Rahmen 28 sind daher so wie bei dem ersten Ausführungsbeispiel die Energieversorgung, die Elektronikeinheit 70 und die Endschalter 60 angeordnet.

Bei der in dem ersten Ausführungsbeispiel vorgesehenen starren Anordnung des Messmoduls 30 in dem oberen Schlitten 10 beeinträchtigen Ungleichmäßigkeiten der Dicke des Antriebsriemens 12 oder an dem Flächengebilde haftender Schmutz die Genauigkeit beispielsweise einer Dickenmessung einer Papiermaschinenbespannung. Diese Beeinträchtigung der Messgenauigkeit durch Ungleichförmigkeiten des Antriebsriemens 12 wird durch die schwimmende Lagerung des Messmoduls 30 im oberen Rahmen 28 des oberen Schlittens 10 und zweckmäßig zusätzlich die schwimmende Lagerung der Messgegenplatte im unteren Rahmen 82 vermieden.

Ein weiterer Unterschied beider Ausführungsbeispiele besteht darin, dass statt der Gleitkufen 21 des ersten Ausführungsbeispiels bei dem zweiten Ausführungsbeispiel entlang der seitlichen Ränder des unteren Rahmens 82 eine Anzahl von Rollen 78 vorgesehen ist. Das Messmodul 30 und die Messgegenplatte 80 weisen eigene Rollen 98 auf.

Wie in Fig. 12 erkennbar, fehlen bei dem zweiten Ausführungsbeispiel ferner die Führungskufen 38 am Messmodul 30 und ist die Keramikkugel 34 durch einen konvexen Tastkopf 35 ersetzt. Zur Messung der Spannung in dem Flächengebilde 8 genügen die Führungskufen 22 auf der Messgegenplatte 80. Der vertikal bewegliche Tastkopf 35 überträgt die Kraft ebenso wie die Keramikkugel 34 auf die Druckmessdose 36.

Liste der Bezugszeichen
- 8: Flächengebilde
- 10: oberer Schlitten
- 11: Führungsschiene
- 12: Antriebsriemen
- 13: Zahnriemenscheiben
- 14: Zahnriemenscheiben
- 16: Transmissionsriemen
- 18: Schrittmotor
- 20: unterer Schlitten
- 21: Gleitkufen
- 22: Führungskufen
- 24: Permanentmagnet oberer Schlitten
- 26: Permanentmagnet unterer Schlitten
- 28: oberer Rahmen
- 30: Messmodul
- 32: Rändelschrauben
- 33: Fassung
- 34: Keramikkugel
- 35: Tastkopf
- 36: Druckmessdose
- 38: Führungskufen
- 40: Fahrweg-Messeinrichtung
- 42: Rad
- 44: Inkremental-Wellen- Drehgeber
- 46: Kamera
- 47: Objektiv
- 48: Beleuchtungsring
- 50: Dicken-Messeinrichtung
- 51: Linearführung
- 52: Wegaufnehmer
- 54: Tastkopf
- 55: Distanzkufen
- 56: Referenzelement
- 58: Tastkopf
- 60: Endschalter
- 62: Hebel
- 64: Sensor
- 70: Elektronikeinheit
- 78: Rollen
- 80: Messgegenplatte
- 82: unterer Rahmen
- 84: Permanentmagnete am Messmodul
- 86: Permanentmagnete an der Messgegenplatte
- 88: Arretierbolzen
- 90: Aufnahme
- 92: Bohrung
- 94: Bolzen
- 96: Sicherungsscheiben
- 98: Rollen

## Patentansprüche

1. Vorrichtung zum Inspizieren eines Flächengebildes (8) mit einem oberen Schlitten (10), der für die Anordnung auf der Oberseite des Flächengebildes (8) vorgesehen ist;
mit einem unteren Schlitten (20), der für die Anordnung auf der Unterseite des Flächengebildes (8) vorgesehen ist;
mit Magneten (24, 26), die im oberen und im unteren Schlitten (10, 20) angeordnet sind und dazu dienen, den oberen und den unteren Schlittens (10, 20) auf gegenüberliegenden Seiten des Flächengebildes (8) zu halten; und
mit einer Antriebseinrichtung (12, 18) zum Bewegen der Vorrichtung über das Flächengebilde (8), wobei die Antriebseinrichtung einen Raupenantrieb mit zwei seitlich beabstandeten Antriebsriemen (12) aufweist,
**dadurch gekennzeichnet, dass** jeder Antriebsriemen (12) einen eigenen Antrieb hat und die Antriebsriemen (12) mit unterschiedlichen Geschwindigkeiten antreibbar sind.

2. Vorrichtung nach Anspruch 1, mit einer Messeinrichtung (36, 50), die auf wenigstens einem der Schlitten (10, 20) vorgesehen ist, wobei die Messeinrichtung als Modul (30) mit dem oberen oder unteren Schlitten (10, 20) verbindbar ist.

3. Vorrichtung nach Anspruch 1 oder 2, mit einer Weglängenbestimmungseinrichtung (40) zur Bestimmung des von der Vorrichtung zurückgelegten Weges.

4. Vorrichtung nach einem der Ansprüche 1 bis 3, mit einer Kamera zur Inspektion des Flächengebildes (8).

5. Vorrichtung nach einem der Ansprüche 2 bis 4, wobei das Messmodul (30) schwimmend im oberen Schlitten (10) gelagert ist.

6. Vorrichtung nach Anspruch 5, wobei eine Messgegenplatte (80) schwimmend im unteren Schlitten (20) gelagert ist.

7. Vorrichtung nach Anspruch 6, wobei zusätzliche, eigene Magnete (84, 86) an dem Messmodul (30) und der Messgegenplatte (80) vorgesehen sind, um diese auf gegenüberliegenden Seiten des Flächengebildes (8) zu halten.

## Claims

1. Device for inspecting a fabric (8), with an upper carriage (10) which is provided for attachment to the top of the fabric (8);
with a lower carriage (20) which is provided for attachment to the bottom of the fabric (8);
with magnets (24, 26) which are arranged in the upper and lower carriages (10, 20) and serve to keep the upper and lower carriages (10, 20) on opposite sides of the fabric (8); and
with a drive apparatus (12, 18) for moving the device over the fabric (8), wherein the drive apparatus has a crawler drive with two laterally spaced drive belts (12),
**characterized in that** each drive belt (12) has its own drive and the drive belts (12) can be driven at different speeds.

2. Device according to claim 1, with a measuring device (36, 50) which is provided on at least one of the carriages (10, 20), wherein the measuring device can be connected as a module (30) to the upper or lower carriage (10, 20).

3. Device according to claim 1 or 2, with a path-length measuring device (40) for determining the path travelled by the device.

4. Device according to one of claims 1 to 3, with a camera for inspecting the fabric (8).

5. Device according to one of claims 2 to 4, wherein the measuring module (30) is housed floating in the upper carriage (10).

6. Device according to claim 5, wherein a measuring counterplate (80) is housed floating in the upper carriage (20).

7. Device according to claim 6, wherein additional, separate magnets (84, 86) are provided at the measuring module (30) and the measuring counterplate (80) in order to keep these on opposite sides of the fabric (8).

## Revendications

1. Dispositif en vue de l'inspection d'une structure plate (8) avec un chariot supérieur (10), qui est prévu en vue de l'arrangement sur la face supérieure de la structure plate (8) ; avec un chariot inférieur (20) qui est prévu en vue de l'arrangement sur la face inférieure de la structure plate (8) ;
avec des aimants (24, 26) qui sont disposés dans les chariots supérieur et inférieur (10, 20) et qui servent à maintenir les chariots supérieur et inférieur (10, 20) sur les faces opposées de la structure plate (8) ; et avec un équipement d'entraînement (12, 18) en vue du déplacement du dispositif sur la structure plate (8), l'équipement d'entraînement présentant un entraînement à chenilles ayant deux courroies d'entraînement (12) séparées latéralement,
**caractérisé en ce que** chaque courroie d'entraînement (12) possède son propre entraînement et **en ce que** les courroies d'entraînement (12) peuvent être entraînées à des vitesses différentes.

2. Dispositif selon la revendication 1, avec un équipement de mesure (36, 50) qui est prévu sur au moins un des chariots (10, 20), l'équipement de mesure pouvant être relié en tant que module (30) au chariot supérieur ou inférieur (10, 20).

3. Dispositif selon la revendication 1 ou 2, avec un équipement de détermination de la longueur de trajet (40) en vue de la détermination du trajet effectué par le dispositif.

4. Dispositif selon l'une quelconque des revendications 1 à 3, avec une caméra en vue de l'inspection de la structure plate (8).

5. Dispositif selon l'une quelconque des revendications 2 à 4, le module de mesure (30) étant monté d'une manière flottante sur le chariot supérieur (10).

6. Dispositif selon la revendication 5, une plaque de mesure (80) opposée étant montée d'une manière flottante sur le chariot inférieur (20).

7. Dispositif selon la revendication 1, des aimants propres supplémentaires (84, 86) étant montés sur le module de mesure (30) et la plaque de mesure opposée (80), pour maintenir ces derniers sur les faces opposées de la structure plate (8).
